# EUROPÄISCHE PATENTSCHRIFT

(11) **EP 3 083 825 B1**
(45) Veröffentlichungstag und Bekanntmachung des Hinweises auf die Patenterteilung: **27.03.2019**
(21) Anmeldenummer: 14818970.7
(22) Anmeldetag: 18.12.2014
(51) Int. Cl.: C08L 53/02, C08L 25/04, B29C 67/00

(54) **VERWENDUNG VON FORMMASSEN BASIEREND AUF VINYLAROMAT-DIEN-BLOCKCOPOLYMEREN FÜR DEN 3D DRUCK**
USE OF MOLDING MATERIALS BASED ON VINYL AROMATIC/DIENE BLOCK COPOLYMERS FOR 3-D PRINTING
UTILISATION DE MATIÈRE À MOULER À BASE DE COPOLYMÈRES EN BLOC VINYL-AROMATIQUE-DIÈNE POUR L'IMPRESSION EN 3D

(30) Priorität: 18.12.2013 EP 13198149
(43) Veröffentlichungstag der Anmeldung: 26.10.2016
(73) Patentinhaber: INEOS Styrolution Group GmbH, 60325 Frankfurt (DE)
(72) Erfinder: NIESSNER, Norbert, 67159 Friedelsheim (DE); EISENTRÄGER, Frank, 50996 Köln (DE)
(74) Vertreter: Jacobi, Markus Alexander
(86) Internationale Anmeldenummer: PCT/EP2014/078488
(87) Internationale Veröffentlichungsnummer: WO 2015/091814

(56) Entgegenhaltungen:
- DE-A1-102007 061 445
- US-A1- 2009 295 032

## Beschreibung

Die Erfindung betrifft die Verwendung einer Formmasse basierend auf Vinylaromat-Dien-Blockcopolymeren mit optimiertem Zähigkeits/Viskositäts-Verhältnis für den 3D-Druck.

Die Verwendung von amorphen Thermoplasten für den 3D-Druck, insbesondere von ABS, ist bekannt. So wird in der EP-A 1015215 ein Verfahren zur Herstellung eines dreidimensionalen Objekts von vorbestimmter Form aus einem thermisch verfestigbaren Material beschrieben. Für den 3D-Druck wird zunächst das Material verflüssigt und extrudiert, unter Bewegung werden mehrere Schichten des Materials auf einen Träger aufgebracht, und dann wird das geformte Material durch Kühlen unter die Erstarrungstemperatur des Materials verfestigt. Als thermisch verfestigbares Material werden amorphe Thermoplasten, insbesondere Acrylnitril-Butadien-Styrol (ABS), verwendet.

EP-A 1087862 beschreibt ein Rapid-Prototyping-System zur Herstellung eines dreidimensionalen Gegenstands durch Extrusion und Aufbringen von erstarrbarem thermoplastischem Modellier- und Stützmaterial in mehreren Schichten. Das thermoplastische Material wird über eine Spule zugeführt. Als geeignetes modellierbares Material wird ABS genannt. Als brüchiges Stützmaterial, welches nach Fertigstellung des 3D-Modells entfernt wird, wird eine Mischung aus ABS und einem Polystyrol-Copolymer als Füllmaterial mit einem Anteil von bis zu 80% eingesetzt.

EP-A 1497093 beschreibt ein Verfahren zur Herstellung eines Prototyps eines Kunststoffspritzteils aus einem thermoplastischen Material, das verflüssigt in eine Form eingespritzt wird bis es deren Hohlraum ausfüllt und nach Aushärten den Prototyp bildet. Der Prototyp wird dabei via Fused Deposition Molding, einer speziellen 3D Druckmethode hergestellt. Das thermoplastische Material wird ausgewählt aus: ABS, Polycarbonat, Polystyrol, Acrylaten, amorphen Polyamiden, Polyestern, PPS, PPE, PEEK, PEAK und Mischungen davon, bevorzugt ist ABS. Um Schrumpfphänomene zu vermeiden werden vorzugsweise amorphe Thermoplasten eingesetzt.

US 2008/0071030 beschreibt ein thermoplastisches Material, welches zur Herstellung von dreidimensionalen Modellen durch mehrschichtige Abscheidung verwendet wird. Das thermoplastische Material enthält ein Basispolymer, ausgewählt aus der Gruppe bestehend aus:
Polyethersulfonen, Polyetherimiden, Polyphenylsulfonen, Polyphenylenen, Polycarbonaten, Polysulfonen, Polystyrolen, Acrylaten, amorphen Polyamiden, Polyestern, Nylon, Polyetheretherketonen und ABS, und 0,5 bis 10 Gew.-% eines Silikon-Trennmittels. Bevorzugt wird als Basispolymer Polyethersulfon eingesetzt und Mischungen davon mit Polystyrol (3 - 8 Gew.-%). Zur Vermeidung von Schrumpf werden vorzugsweise amorphe Polymere und gegebenenfalls übliche Füllmaterialien eingesetzt.

In der US 2009/0295032 werden für den 3D-Druck modifizierte ABS Materialien vorgeschlagen. Die ABS-Materialien werden durch zusätzliche Monomere, Oligo- oder Polymere, insbesondere Acrylate modifiziert. Beispielhaft werden MMA modifizierte ABS/Poly(Styrol-Acrylnitril)-Blends genannt.

Die vorgenannten Materialien sind jedoch oftmals für den 3D-Druck zu spröde und in Bezug auf die Zähigkeit sowie ihren Geruch verbesserungsbedürftig. Darüber hinaus ist bei den Materialien des Standes der Technik oftmals auch die Viskosität unter den Bedingungen des Schmelzflussindexes bei niedrigen Scherraten zu hoch und ebenfalls verbesserungsbedürftig.

Eine Aufgabe der vorliegenden Erfindung ist es verbesserte geruchsarme thermoplastische Materialien für den 3-D-Druck mit optimiertem Zähigkeits/Viskositäts-Verhältnis bereitzustellen. Die Aufgabe wurde gelöst durch die Verwendung einer Formmasse für den 3D-Druck wie nachstehend beschrieben:
Gegenstand der Erfindung die Verwendung von Formmassen für den 3D-Druck enthaltend (bzw. bestehend aus) Komponenten A, B1, B2 und C:
A: 5 bis 100 Gew.-% mindestens eines Vinylaromat-Dien-Blockcopolymers A, insbesondere eines Styrol-Butadien-Blockcopolymers, enthaltend:
   a) 30 bis 95 Gew.% mindestens eines Vinylaromaten, insbesondere Styrol, und
   b) 5 bis 70 Gew.-% mindestens eines Diens, insbesondere Butadien,
      wobei sich a) und b) zu 100 Gew.-% ergänzen,
B1: 0 bis 95 Gew.-% mindestens eines Polymeren B1 ausgewählt aus der Gruppe bestehend aus: Standard-Polystyrol, schlagfestem Polystyrol (HIPS), Styrol-Acrylnitril-Copolymeren, α-Methylstyrol-Acrylnitril-Copolymeren, Styrol-Maleinsäureanhydrid-Copolymeren, Styrol-Phenylmaleinimid-Copolymeren, Styrol-Methylmethacrylat-Copolymeren, Styrol-Acrylnitril-Maleinsäureanhydrid-Copolymeren, Styrol-Acrylnitril-Phenylmaleinimid-Copolymeren, α-Methylstyrol-Acrylnitril-Methylmethacrylat-Copolymeren, α-Methylstyrol-Acrylnitril-t-Butylmethacrylat-Copolymeren und Styrol-Acrylnitril-t-Butylmethacrylat-Copolymeren,
B2:0 bis 60 Gew.-% eines oder mehrerer weiterer Polymere B2 ausgewählt aus: Polycarbonaten, Polyamiden, Poly(meth)acrylaten, Polyestern, teilkristallinen Polyolefinen und Polyvinylchlorid,
C: 0 bis 50 Gew.-% übliche Additive und Hilfsmittel,
   wobei die Anteile von A, B1, B2 und C jeweils auf die gesamte Formmasse bezogen sind und deren Summe 100 Gew.-% ergibt,
dadurch gekennzeichnet, dass die Viskosität (gemessen nach ISO 11443) der Formmasse bei Scherraten von 1 bis 10 1/s und bei Temperaturen von 250 °C nicht höher als 1x10⁵ Pa*s ist und die Melt Volume Rate (MVR, gemessen nach ISO 1133 bei 220°C und 10 kg Last) mehr als 6 ml/10 min beträgt, der Restmonomergehalt der Formmasse nicht mehr als 1000 ppm beträgt, und deren Lösungsmittelgehalt nicht mehr als 1000 ppm beträgt.

Im Sinne der vorliegenden Erfindung ist unter 3D-Druck die Herstellung von dreidimensionalen Formkörpern mit Hilfe einer für den 3D-Druck geeigneten Vorrichtung (3D-Drucker) zu verstehen.

In der erfindungsgemäß verwendeten Formmasse beträgt der Anteil der Komponente A im Allgemeinen 5 bis 100 Gew.-%, bevorzugt 20 bis 100 Gew.-%, besonders bevorzugt 30 bis 80 Gew.-%, ganz besonders bevorzugt 40 bis 60 Gew.-%, bezogen auf die gesamte Formmasse.

Der Anteil der Komponente B1 beträgt im Allgemeinen 0 bis 95 Gew.-%, bevorzugt 0 bis 80 Gew.-%, besonders bevorzugt 20 bis 70 Gew.-%, ganz besonders bevorzugt 40 bis 60 Gew.-%, bezogen auf die gesamte Formmasse.
Falls Polymer B1 in der Formmasse vorhanden ist, beträgt dessen Mindestanteil üblicherweise 0,1 Gew.-%.

Der Anteil der Komponente B2 beträgt im Allgemeinen 0 bis 60 Gew.-%, bevorzugt 0 bis 30 Gew.-%, besonders bevorzugt 0 bis 20 Gew.-%, bezogen auf die gesamte Formmasse. Falls Polymer B2 in der Formmasse vorhanden ist, beträgt dessen Mindestanteil üblicherweise 0,1 Gew.-%.

Der Anteil der Additive und/oder Hilfsmittel C beträgt im Allgemeinen 0 bis 50 Gew.-%, bevorzugt 0,1 bis 30, besonders bevorzugt 0,2 bis 10 Gew.-%, bezogen auf die gesamte Formmasse.

Falls Additive und/oder Hilfsmittel C in der Formmasse vorhanden sind, beträgt deren Mindestanteil üblicherweise 0,1 Gew.-%.

Die Summe der in der gesamten Formmasse enthaltenen Komponenten A und gegebenenfalls B1, B2 und/oder C ergibt 100 Gew.-%.

Bevorzugt ist eine Formmasse bestehend aus den Komponenten A, B1, B2 und C.

Besonders bevorzugt ist eine erfindungsgemäße Formmasse enthaltend oder bestehend aus den Komponenten A, B1 und C.

Weiterhin bevorzugt enthält die erfindungsgemäß eingesetzte Formmasse im Wesentlichen amorphe Polymere, d.h. mindestens die Hälfte (mindestens 50 Gew.-%) der in der Formmasse enthaltenen Polymere sind amorphe Polymere.

### Vinylaromat-Dien-Blockcopolymer A

Die erfindungsgemäß eingesetzten Vinylaromat-Dien-Blockcopolymere A weisen im Allgemeinen mittlere Molmassen Mw (Gewichtsmittel) von 80.000 bis 300.000 g/mol, bevorzugt 100.000 bis 250.000 g/mol, besonders bevorzugt 120.000 bis 200.000 g/mol. Dabei können auch 20% der Vinylaromat-Dien-Blockcopolymere A höhere oder niedrigere Molmassen als die vorgenannten aufweisen, bezogen auf die Gesamtmenge der eingesetzten Vinylaromat-Dien-Blockcopolymere A.

Die Bestimmung der gewichtsmittleren Molmasse Mw erfolgt mittels GPC mit UV-Detektion.

Die Blockcopolymere A können eine lineare oder eine sternförmige Struktur aufweisen.

Bevorzugt ist das Vinylaromat-Dien-Blockcopolymer A ein Styrol-Butadien-Blockcopolymer.

Der Gewichtsanteil des Diens im gesamten Blockcopolymer A liegt im Falle der Monomerkombination Styrol/ Butadien bevorzugt bei 15 - 65 Gew.-%, derjenige der vinylaromatischen Komponente entsprechend bevorzugt bei 85 - 35 Gew.-%.

Besonders bevorzugt sind Butadien-Styrol-Blockcopolymere A mit einer Monomerzusammensetzung aus 25 - 60 Gew.-% Dien und 75 - 40 Gew.-% Styrol.

Die Blockcopolymere A werden vorzugsweise durch sequentielle anionische Polymerisation hergestellt.

Für die Erfindung geeignete Vinylaromat-Dien-Blockcopolymere A sind bekannt. Ihre Herstellung wird beispielsweise in "Modern Styrenic Polymers: Polystyrenes and Styrenic Copolymers" (Eds., J. Scheirs, D. Priddy, Wiley, Chichester, UK, (2003), Seiten 502 bis 507) oder in K. Knoll, N. Nießner, ACS Symp. Ser. 696, 112 (1998) beschrieben.

Ferner sind geeignete Vinylaromat-Dien-Blockcopolymere A z.B. auch als Styrolux® oder Styroflex® (Hersteller Styrolution, Frankfurt) im Handel erhältlich.

Bevorzugt werden erfindungsgemäß Vinylaromat-Dien-Blockcopolymere A1 eingesetzt, enthaltend mindestens zwei Hartblöcke S1 und S2 aus vinylaromatischen Monomeren und mindestens einen dazwischenliegenden Weichblock aus Dienen und gegebenenfalls vinylaromatischen Monomeren, wobei der Anteil der Hartblöcke über 40 Gew.-%, bezogen auf das gesamte Blockcopolymer, beträgt.

Als vinylaromatische Monomere können sowohl für die Hartblöcke S1 und S2 als auch für die Weichblöcke Styrol, α-Methylstyrol, p-Methylstyrol, Ethylstyrol, tert.-Butylstyrol, Vinyltoluol oder Mischungen davon verwendet werden. Bevorzugt wird Styrol verwendet.

Als Diene für den Weichblock B und/oder B/S werden bevorzugt Butadien, Isopren, 2,3-Dimethylbutadien, 1,3-Pentadien, 1,3-Hexadiene oder Piperylen oder Mischungen davon verwendet. Besonders bevorzugt wird 1, 3-Butadien verwendet.

Der Weichblock wird als B oder, falls dieser aus Dienen und vinylaromatischen Monomeren gebildet wird, als B/S bezeichnet.

Bevorzugte Blockcopolymere A1 enthalten außenliegende Hartblöcke S1 und S2 mit unterschiedlicher Blocklänge. Das Molekulargewicht von S1 liegt bevorzugt im Bereich von 5000 bis 30000 g/mol, insbesondere im Bereich von 10000 bis 20000 g/mol. Das Molekulargewicht von S2 beträgt bevorzugt über 35000 g/mol. Bevorzugte Molekulargewichte von S2 liegen im Bereich von 50000 bis 150000 g/mol.

Zwischen den Hartblöcken S1 und S2 können sich auch mehrere Weichblöcke befinden. Bevorzugt werden mindestens 2, vorzugsweise statistische, Weichblöcke (B/S)₁ und (B/S)₂ mit unterschiedlichen Anteilen an vinylaromatischen Monomeren und damit unterschiedlichen Glasübergangstemperaturen.

Die Blockcopolymere A1 können eine lineare oder eine sternförmige Struktur aufweisen.

Als lineares Blockcopolymer A1 wird bevorzugt eines der Struktur S1-(B/S)₁-(B/S)₂-S2 eingesetzt. Das molare Verhältnis von vinylaromatischem Monomer zu Dien S/B liegt im Block (B/S)₁ bevorzugt unter 0,25 und im Block (B/S)₂ bevorzugt im Bereich von 0,5 bis 2.

Als sternförmige Blockcopolymere A1 werden bevorzugt solche mit einer Struktur aus mindestens einem Sternast aus der Blockfolge S1-(B/S) und einem Sternast der Blockfolge S2(B/S) oder solche mit mindestens einem Sternast der Blockfolge S1-(B/S)-S3 und mindestens einem Sternast der Blockfolge S2-(B/S)-S3. S3 steht hierbei für einen weiteren Hartblock aus den genannten vinylaromatischen Monomeren.

Besonders bevorzugt werden sternförmige Blockcopolymere A1 mit Strukturen, die mindestens einen Sternast mit der Blockfolge S1-(B/S)₁-(B/S)₂ und mindestens einen Sternast mit der Blockfolge S2-(B/S)₁-(B/S)₂ oder die mindestens einen Sternast mit der Blockfolge S1-(B/S)₁-(B/S)₂-S3 und mindestens einen Sternast mit der Blockfolge S2- (B/S)₁-(B/S)₂-S3 aufweisen. Das molare Verhältnis von vinylaromatischem Monomer zu Dien S/B liegt im äußeren Block (B/S)₁ bevorzugt im Bereich von 0,5 bis 2 und im Block (B/S)₂ bevorzugt unterhalb 0,5.

Die zuvor beschriebenen Vinylaromat-Dien-Blockcopolymere A1 sind insbesondere Styrol-Butadien-Blockcopolymere.

Die Blockcopolymere A1 werden vorzugsweise durch sequentielle anionische Polymerisation hergestellt.

Die vorgenannten Blockcopolymere A1 sind bekannt. Ihre Herstellung wird beispielsweise in der WO 00/58380 A1 (Seiten 4 bis 6) beschrieben.

Weitere bevorzugte Vinylaromat-Dien-Blockcopolymere A (SBC) sind kautschukelastische Blockcopolymere A2 aus mindestens einem einpolymerisierte Einheiten eines vinylaromatischen Monomeren aufweisenden, eine Hartphase bildenden Block S und/oder einem Dienmonomere aufweisenden, eine erste, kautschukelastische (Weich-)Phase bildenden Block B und mindestens einem einpolymerisierte Einheiten eines vinylaromatischen Monomeren sowie eines Diens aufweisenden elastomeren, eine Weichphase bildenden Block B/S, wobei die Glastemperatur Tg des Blocks S über 250°C und die der Blöcke B bzw. B/S unter 250°C liegt und das Phasenvolumen-Verhältnis von Block S zu Block B/S so gewählt ist, dass der Anteil der Hartphase am gesamten Blockcopolymer 1 - 40 Volumen-% und der Gewichtsanteil des Diens weniger als 50 Gew.-% beträgt.

Der die Weichphase bildende Block B/S aus Dien- und Vinylaromat-Einheiten besitzt einen statistischen Aufbau, den man durch Polymerisation in Gegenwart eines polaren Cosolvens bzw. Randomizers erzielen kann.

Ein erfindungsgemäß eingesetztes Blockcopolymer A2 kann z.B. durch eine der allgemeinen Formeln 1 bis 11 dargestellt werden:
(1) (S-B/S)ₙ;
(2) (S-B/S)ₙ-S;
(3) B/S-(S-B/S)ₙ;
(4) X-[(S-B/S)n]ₘ₊₁;
(5) X-[(B/S-S)n]m+1;
(6) X-[(S-B/S)n-S]m+1;
(7) X-[(B/S-S)n-B/S]m+1;
(8) Y-[(S-B/S)n]m+1;
(9) Y-[(B/S-S)n]m+1;
(10) Y-[(S-B/S)n-S]m+1;
(11) Y-[(B/S-S)n-B/S]m+1;
wobei
S für einen vinylaromatischen Block,
B/S für die Weichphase aus einem statistisch aus Dien- und vinylaromatischen Einheiten aufgebauten Block steht,
X den Rest eines n-funktionellen Initiators,
Y den Rest eines m-funktionellen Kopplungsmittels und
m, n natürliche Zahlen von 1 bis 10 bedeuten.

Bevorzugt ist ein Blockcopolymer A2 einer der allgemeinen Formeln S-B/S-S, X-[-B/S-S]₂ und Y-[-B/S-S]₂ (Bedeutung der Abkürzungen wie vorstehend) und besonders bevorzugt ein Blockcopolymer, dessen Weichphase unterteilt ist in Blöcke
(12) (B/S)₁-(B/S)₂;
(13) (B/S)₁-(B/S)₂-(B/S)₁;
(14) (B/S)₁-(B/S)₂-(B/S)₃;
wobei die Indices 1,2,3 für unterschiedliche Strukturen in dem Sinne stehen, dass das Vinylaromat/Dien-Verhältnis in den einzelnen Blöcken B/S unterschiedlich ist oder sich innerhalb eines Blocks in den Grenzen (B/S)₁(B/S)₂ kontinuierlich ändert, wobei die Glasübergangstemperatur Tg jedes Teilblocks unter 25°C liegt.

Ein Blockcopolymer A2, das mehrere Blöcke B/S und/oder S mit unterschiedlicher Molmasse je Molekül aufweist, ist ebenfalls bevorzugt.

Ebenso kann an die Stelle eines ausschließlich aus vinylaromatischen Einheiten aufgebauten Blocks S ein Block B treten, da es insgesamt lediglich darauf ankommt, dass ein kautschukelastisches Blockcopolymer A2 gebildet wird. Solche Copolymere können z.B. die Struktur (15) bis (18) haben
(15) B-(B/S)
(16) (B/S)-B-(B/S)
(17) (B/S)₁B-(B/S)2
(18) B-(B/S)₁-(B/S)₂.

Bevorzugt als vinylaromatische Verbindung sind Styrol und ferner α-Methylstyrol und Vinyltoluol sowie Mischungen dieser Verbindungen. Bevorzugte Diene sind Butadien und Isopren, ferner Piperylen, 1-Phenylbutadien sowie Mischungen dieser Verbindungen.

Eine besonders bevorzugte Monomerkombination ist Butadien und Styrol. Alle nachstehenden Gewichts- und Volumenangaben beziehen sich auf diese Kombination; bei Verwendung der technischen Äquivalente von Styrol und Butadien muss man ggf. die Angaben entsprechend umrechnen.

Vorzugsweise ist der Weichblock aus 75 - 30 Gew.-% Styrol und 25 - 70 Gew.-% Butadien aufgebaut. Besonders bevorzugt hat ein Weichblock einen Butadienanteil zwischen 35 und 70 % und einen Styrolanteil zwischen 65 und 30 %.

Der Gewichtsanteil des Diens im gesamten Blockcopolymer A2 liegt im Falle der Monomerkombination Styrol/ Butadien bevorzugt bei 15 - 65 Gew.-%, derjenige der vinylaromatischen Komponente entsprechend bevorzugt bei 85 - 35 Gew.-%.

Besonders bevorzugt sind Butadien-Styrol-Blockcopolymere A2 mit einer Monomerzusammensetzung aus 25 - 60 Gew.-% Dien und 75 - 40 Gew.-% Styrol.

Für die mechanischen Eigenschaften ist der Volumenanteil der Weichphase im Festkörper von entscheidender Bedeutung. Erfindungsgemäß liegt der Volumenanteil der aus Dien- und vinylaromatischen Sequenzen aufgebauten Weichphase bei 60 - 99, bevorzugt bei 70 - 90 und besonders bevorzugt bei 80 - 90 Vol.-%. Die aus den vinylaromatischen Monomeren entstandenen Blöcke A bilden die Hartphase, deren Volumenanteil entsprechend 1-40, bevorzugt 10-35 und besonders bevorzugt 15-30 Vol-% ausmacht.

Es ist darauf hinzuweisen, dass zwischen den oben erwähnten Mengenverhältnissen von vinylaromatischer Verbindung und Dien, den vorstehend angegebenen Grenzwerten der Phasenvolumina und der Zusammensetzung, die sich aus den erfindungsgemäßen Bereichen der Glastemperatur ergibt, keine strenge Übereinstimmung besteht, da es sich um jeweils auf volle Zehnerstellen gerundete Zahlenwerte handelt. Dies könnte vielmehr nur zufällig der Fall sein.

Messbar ist der Volumenanteil der beiden Phasen mittels kontrastierter Elektronenmikroskopie oder Festkörper-NMR-Spektroskopie. Der Anteil der vinylaromatischen Blöcke lässt sich nach Osmiumabbau des Polydienanteils durch Fällen und Auswiegen bestimmen. Das künftige Phasenverhältnis eines Polymeren lässt sich auch aus den eingesetzten Monomermengen berechnen, wenn man jedesmal vollständig auspolymerisieren lässt.

Das Blockcopolymer A2 wird eindeutig definiert durch den Quotienten aus dem Volumenanteil in Prozent der aus den B/S-Blöcken gebildeten Weichphase und dem Anteil an Dieneinheiten in der Weichphase, der für die Kombination Styrol/Butadien zwischen 25 und 70 Gew.% liegt.

Durch den statischen Einbau der vinylaromatischen Verbindungen in den Weichblock des Blockcopolymeren und die Verwendung von Lewis-Basen während der Polymerisation wird die Glasübergangstemperatur (Tg) beeinflußt. Die Glasübergangstemperatur des gesamten Blockcopolymers A2 beträgt vorzugsweise - 50 bis +25°C, bevorzugt -50 bis +5°C.

Das Molekulargewicht des Blocks S beträgt vorzugsweise 1000 bis 200.000, insbesondere 3.000 und 80.000 [g/mol]. Innerhalb eines Moleküls können S-Blöcke unterschiedliche Molmasse haben.

Das Molekulargewicht des Blocks B/S beträgt üblicherweise von 2.000 bis 250.000 [g/mol]; bevorzugt sind Werte von 5.000 bis 150.000 [g/mol].

Auch der Block B/S kann wie der Block S innerhalb eines Moleküls unterschiedliche Molekulargewichtswerte einnehmen.

Das Kupplungszentrum X wird durch die Umsetzung der lebenden anionischen Kettenenden mit einem mindestens bifunktionellen Kupplungsagens gebildet. Beispiel für derartige Verbindungen sind in den US-PSen 3 985 830, 3 280 084, 3 637 554 und 4 091 053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde wie Terephthalaldehyd und Ester wie Ethylformiat oder -benzoat geeignet.

Bevorzugte Polymerstrukturen A2 sind S-B/S-S, X-[-B/S-S]2 und Y-[-B/S-S]₂, wobei der statistische Block B/S selbst wieder in Blöcke B1/S1-B2/S2-B3/S3-... unterteilt sein kann. Bevorzugt besteht der statistische Block aus 2 bis 15 statistischen Teilblöcken, besonders bevorzugt aus 3 bis 10 Teilblöcken.

Die vorstehend beschriebenen Blockcopolymere A2 sind ebenfalls durch anionische Polymerisation erhältlich.

Die vorgenannten Blockcopolymere A2 sind bekannt. Ihre Herstellung wird beispielsweise in den Druckschriften WO 95/35335 A1 (Seiten 5 bis 9) und WO 96/20248 A1 (Seiten 7 bis 10) beschrieben.

### Polymer B1

Als Polymer B1 geeignete schlagfeste Polystyrole (HIPS) und Standard-Polystyrole (GPPS), deren Herstellung, Struktur und Eigenschaften sind in der Übersichtsliteratur (A. Echte, F. Haaf, J. Hambrecht in Angew. Chem. (Int. Ed. Engl.) 20, 344-361, (1981); sowie im Kunststoffhandbuch, Hrg. R. Vieweg und G. Daumiller, Bd. 4 "Polystyrol", Carl-Hanser-Verlag München (1996) eingehend beschrieben.

Darüber hinaus können die verwendeten schlagzähen Polystyrole durch die Verwendung spezieller Polybutadien-Kautschuke z.B. mit gegenüber herkömmlichen Kautschuken veränderten 1,4-cis bzw. 1,4-trans-Anteil oder 1,2 und 1,4-Verknüpfungsanteil strukturell verändert sein. Ferner können anstelle von Polybutadienkautschuk auch andere Dienkautschuke sowie Elastomere von der Art des Ethylen-Propylen-Dien-Copolymer (EPDM-Kautschuk) sowie hydrierte Dienkautschuke eingesetzt werden.

Geeignetes Standard-Polystyrol wird nach dem Verfahren der anionischen bzw. radikalischen Polymerisation hergestellt. Die durch das Polymerisationsverfahren beeinflussbare Uneinheitlichkeit des Polymers ist dabei von untergeordneter Bedeutung. Bevorzugt werden Standard-Polystyrol und schlagzähes Polystyrol, deren toluollöslicher Anteil ein mittleres Molekulargewicht Mw von 50.000 bis 500.000 g/mol aufweist und die gegebenenfalls noch mit Additiven, wie beispielsweise Mineralöl (z.B. Weißöl), Stabilisator, Antistatika, Flammschutzmittel oder Wachsen ausgerüstet sind.

Erfindungsgemäß als Polymer B1 eingesetzte SAN-Copolymere und α-Methylstyrol-Acrylnitril-Copolymere (AMSAN) enthalten im Allgemeinen 18 bis 35 Gew.-%, bevorzugt 20 bis 32 Gew.-%, besonders bevorzugt 22 bis 30 Gew.-% Acrylnitril (AN), und 82 bis 65 Gew.-%, bevorzugt 80 bis 68 Gew.-%, besonders bevorzugt 78 bis 70 Gew.-% Styrol (S) bzw. α-Methylstyrol (AMS), wobei die Summe aus Styrol bzw. α-Methylstyrol und Acrylnitril 100 Gew.-% ergibt.

Die eingesetzten SAN und AMSAN-Copolymere weisen im Allgemeinen eine mittlere Molmasse Mw von 150.000 bis 350.000 g/mol, bevorzugt 150.000 bis 300.000 g/mol, besonders bevorzugt 150.000 bis 250.000 g/mol, und ganz besonders bevorzugt 150.000 bis 200.000 g/mol auf.

Als SAN-Copolymere geeignet sind handelsübliche SAN-Copolymere wie beispielsweise Luran® von der Firma Styrolution. Bevorzugt werden SAN-Copolymere mit einem S/AN-Verhältnis (in Gewichtsprozent) von 81/19 bis 67/33 und einem MVR (gemessen nach ISO 1133 bei 220°C und 10 kg Last) von mindestens 10 ml/10 min eingesetzt wie beispielsweise Luran 368 eingesetzt.

Erfindungsgemäß als Polymer B1 eingesetzte SMMA-Copolymere enthalten im Allgemeinen 18 bis 50 Gew.-%, bevorzugt 20 bis 30 Gew.-% Methylmethacrylat (MMA), und 50 bis 82 Gew.-%, bevorzugt 80 bis 70 Gew.-% Styrol, wobei die Summe aus Styrol und MMA 100 Gew.-% ergibt.

Erfindungsgemäß als Polymer B1 eingesetzte SMSA-Copolymere enthalten im Allgemeinen 10 bis 40 Gew.-%, bevorzugt 20 bis 30 Gew.-% Maleinsäureanhydrid (MSA), und 60 bis 90 Gew.-%, bevorzugt 80 bis 70 Gew.-% Styrol, wobei die Summe aus Styrol und MSA 100 Gew.-% ergibt.

Die vorgenannten Polymere B1 haben eine Viskositätszahl VZ (ermittelt nach DIN 53 726 bei 25°C, an einer 0,5 Gew.-%igen Lösung des Polymers B1 in Dimethylformamid) von 50 bis 120, bevorzugt 52 bis 100 und besonders bevorzugt 55 bis 80 ml/g. Die Polymere B1 werden in bekannter Weise durch Masse-, Lösungs-, Suspensions-, Fällungs- oder Emulsionspolymerisation erhalten, wobei Masse- und Lösungspolymerisation bevorzugt sind. Einzelheiten dieser Verfahren sind z. B. im Kunststoffhandbuch, Hrg. R. Vieweg und G. Daumiller, Bd. 4 "Polystyrol", Carl-Hanser-Verlag München 1996, S. 104 ff sowie in "Modern Styrenic Polymers: Polystyrenes and Styrenic Copolymers" (Eds., J. Scheirs, D. Priddy, Wiley, Chichester, UK, (2003), Seiten 27 bis 29) und in GB-A 1472195 beschrieben.

Bevorzugt wird als Polymer B1 schlagfestes Polystyrol und/oder Standard-Polystyrol eingesetzt.

### Polymer B2

Die erfindungsgemäße Formmasse kann gegebenenfalls mindestens ein Polymer B2 ausgewählt aus Polycarbonaten, Polyamiden, Poly(meth)acrylaten, Polyestern, teilkristallinen Polyolefinen, Polyvinylidenchlorid und Polyvinylchlorid enthalten.

Als Polymer B2 geeignete Polycarbonate sind an sich bekannt. Sie sind z.B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im Allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 mol.-% der vorstehend genannten aromatischen Dihydroxyverbindungen.

Die relative Viskosität dieser Polycarbonate liegt im Allgemeinen im Bereich von 1,1 bis 1,5, insbesondere 1,28 bis 1,4 (gemessen bei 25°C in einer 0,5 gew.-%igen Lösung in Dichlormethan).

Als Polymer B2 geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch C1-C4-Alkylgruppen wie Methyl-, Ethyl-, i- bzw. n-Propyl- und n-, i- bzw. tert.-Butylgruppen.

Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 10 mol.-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat, Polyethylennaphthalat und Polybutylenterephthalat bevorzugt.

Die Viskositätszahl der Polyester liegt im Allgemeinen im Bereich von 60 bis 200 ml/g (gemessen in einer 0,5 gew.-%igen Lösung in einem Phenol/o-Dichlorbenzolgemisch (Gew.-Verh. 1:1 bei 25°C)).

Als Polymer B2 geeignete Poly(meth)acrylate seien insbesondere Polymethylmethacrylat (PMMA) sowie Copolymere auf der Basis von Methylmethacrylat mit bis zu 40 Gew.-% weiterer copolymerisierbarer Monomerer genannt, wie sie beispielsweise unter den Bezeichnungen Lucryl® von Fa. Lucite oder Plexiglas® von Fa. Evonik erhältlich sind.

Ferner sind teilkristalline, bevorzugt lineare Polyamide wie Polyamid-6, Polyamid-6,6, Polyamid-4,6, Polyamid-6,12 und teilkristalline Copolyamide auf Basis dieser Komponenten geeignete Polymere B. Weiter können teilkristalline Polyamide eingesetzt werden, deren Säurekomponente ganz oder teilweise aus Adipinsäure und/oder Terephthalsäure und/oder Isophthalsäure und/oder Korksäure und/oder Sebacinsäure und/oder Acelainsäure und/oder Dodecandicarbonsäure und/oder einer Cyclohexandicarbonsäure besteht, und deren Diaminkomponente ganz oder teilweise insbesondere aus m und/oder p-Xylylendiamin und/oder Hexamethylendiamin und/oder 2,2,4- und/oder 2,4,4-Trimethylhexamethylendiamin und/oder Isophorondiamin besteht, und deren Zusammensetzungen im Prinzip bekannt sind (vgl. Encyclopedia of Polymers, Vol. 11, S. 315 ff.).

Die Molekulargewichte Mn (Zahlenmittel) der als Polymer B geeigneten Polyamide liegen bevorzugt im Bereich zwischen 5.000 und 100.000, besonders bevorzugt zwischen 10.000 und 80.000.

Geeignet sind teilkristalline lineare Polyamide z.B. mit einer relativen Viskosität von 2,2 bis 4,5, gemessen in 0,5%iger Lösung (0,5 g/l00 ml) in 96 gew.-%iger Schwefelsäure bei 25oC. Bevorzugt sind Polyamide, die sich ganz oder teilweise von Lactamen mit 7 bis 13 Ringgliedern ableiten, wie Polycaprolactam, Polycapryllactam oder Polylaurinlactam.

Geeignet sind ferner Polyamide, die durch Umsetzung von Dicarbonsäuren mit einem oder mehreren Diaminen erhalten werden. Geeignete Dicarbonsäuren sind beispielsweise Alkandicarbonsäuren mit 6 bis 12, insbesondere 6 bis 10 Kohlenstoffatomen, insbesondere Adipinsäure. Geeignete Diamine sind beispielsweise Alkan- oder Cycloalkandiamine mit 4 bis 12, insbesondere 4 bis 8 Kohlenstoffatomen; Hexamethylendiamin, m-Xylylendiamin, Bis(4-aminophenyl)methan, Bis(4-aminocyclohexyl)methan oder Bis(4-aminophenyl)propan-2,2 oder deren Mischungen sind besonders geeignete Partner zur Herstellung solcher Polyamide. Es kann vorteilhaft sein, die genannten Polyamide für sich herzustellen und deren Mischungen zu verwenden.

Besondere technische Bedeutung haben Polyamid-6 (Polycaprolactam), Polyamid-6,6 (Polyhexamethylenadipinamid) und Polyamide, die zu mindestens 80 Gew.-% aus wiederkehrenden Einheiten der Formel -[-NH-(CH2)4-NH-CO-(CH2)4-CO-]- aufgebaut sind. Die zuletzt genannten Polyamide sind durch Kondensation von 1,4-Diaminobutan mit Adipinsäure erhältlich. Geeignete Herstellungsverfahren für Polyamide sind z.B. in EP-A-38 094, EP-A-38 582 und EP-A-39 524 beschrieben.

Ebenfalls geeignet sind Polyamide mit geringem Anteil, vorzugsweise bis etwa 10 Gew.-%, an anderen einkondensierbaren Bestandteilen, insbesondere anderen Amidbildnern wie beispielsweise a,w-Aminosäuren oder N-Carbonsäure-anhydriden (Leuchs-anhydriden) von Aminosäuren.

Besonders bevorzugt sind teilaromatische Copolyamide B enthaltend 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der Gesamtmenge an eingesetzten aromatischen Dicarbonsäuren kann durch Isophthalsäure oder andere aromatische Dicarbonsäuren ersetzt werden, vorzugsweise solche, in denen die Carboxylgruppen in para-Stellung stehen.

Neben den Einheiten, die sich von Terephthalsäure und Hexamethylendiamin ableiten, enthalten die teilaromatischen Copolyamide Einheiten, die sich von ε-Caprolactam ableiten und/oder Einheiten, die sich von Adipinsäure und Hexamethylendiamin ableiten.

Der Anteil an Einheiten, die sich von ε-Caprolactam ableiten, beträgt bis zu 50 Gew. - %, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten; in diesem Fall beträgt der Anteil an Einheiten, die frei von aromatischen Gruppen sind, bevorzugt mindestens 10 Gew.-%, vorzugsweise mindestens 20 Gew.-%. Das Verhältnis der Einheiten, die sich von e-Caprolactam und von Adipinsäure und Hexamethylendiamin ableiten, unterliegt dabei keiner besonderen Beschränkung.

Der Schmelzpunkt besonders geeigneter teilaromatischer Copolyamide liegt z.B. im Bereich von 260 bis über 300°C, wobei dieser hohe Schmelzpunkt auch mit einer hohen Glasübergangstemperatur von in der Regel mehr als 75°C, insbesondere mehr als 85°C verbunden ist.
Binäre Copolyamide auf der Basis von Terephthalsäure, Hexamethylendiamin und ε-Caprolactam weisen bei einem Gehalt von etwa 70 Gew.-% an Einheiten, die sich von Terephthalsäure und Hexamethylendiamin ableiten, einen Schmelzpunkt im Bereich von 300°C und eine Glasübergangstemperatur von mehr als 110°C auf.

Binäre Copolyamide auf der Basis von Terephthalsäure, Adipinsäure und Hexamethylendiamin erreichen bereits bei einem Gehalt von etwa 55 Gew.-% Einheiten aus Terephthalsäure und Hexamethylendiamin einen Schmelzpunkt von 300°C und mehr, wobei die Glasübergangstemperatur nicht ganz so hoch liegt wie bei binären Copolyamiden, die ε-Caprolactam anstelle von Adipinsäure bzw. Adipinsäure/Hexamethylendiamin enthalten.

Geeignete teilaromatische Copolyamide können nach den in den EP-A 129 195 und EP-A 129 196 beschriebenen Verfahren hergestellt werden.

Erfindungsgemäß können als Polymer B2 ferner amorphe Polyamide verwendet werden. Basierend auf den bereits genannten Monomeren werden noch zusätzliche, häufig mit einer oder mehreren, die Kristallisation behindernden Seitengruppen versehene Monomere einkondensiert. Als Resultat erhält man ein in der Regel transparentes Polyamid.

Weiterhin geeignet als Polymer B2 sind teilkristalline Polyolefine, vorzugsweise Homo- und Copolymere von C1-C8-Olefinen wie Ethylen, Propylen, Buten-1, Penten-1, Hexen-1, Hepten-1, 3-Methylbuten-1, 4-Methylbuten-1, 4-Methylpenten-1 und Octen-1. Geeignete Polyolefine sind demnach z.B. Polyethylen, Polypropylen, Polybuten-1 oder Poly-4-methylpenten-1. Allgemein unterscheidet man bei Polyethylen (PE) unter High-Density-PE (HDPE), Low-Density-PE (LDPE) und linear-low-density-PE (LLDPE).

Bevorzugt als Komponente B2 geeignete Polyolefine sind Polyethylen, Polypropylen und Poly-4-methylpenten-1, insbesondere Polyethylen und Polypropylen.

Weiterhin verwendet werden können als Polymer B2 halogenierte Polymere wie Polyvinylidenchlorid und Polyvinylchlorid (PVC). PVC wird bevorzugt modifiziert eingesetzt. Zur Modifizierung werden niedermolekulare Weichmacher (z.B. Dioctylphthalat, Dioctyladipat) und/oder polymere Verbindungen eingesetzt.

PVC kann durch Polymerisation in Suspensions-, Emulsions- oder Masseverfahren hergestellt werden. Mischungen von PVC mit Weichmachern enthalten in der Regel noch Verarbeitungsstabilisatoren.

Ohne Weichmacher verarbeitbares PVC wird bevorzugt durch (Suspensions-) PfropfPolymerisation von Vinylchlorid auf ein Elastomer hergestellt. Das Elastomer kann aus Polybutadien und/oder Polyacrylatkautschuk bestehen.

### Additive und/oder Hilfsmittel C

Die erfindungsgemäße Formmasse kann gegebenenfalls übliche Additive und/oder Hilfsmittel C wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, faser- und pulverförmige Füll- und Verstärkungsmittel, Keimbildungsmittel, Weichmacher usw. enthalten, deren Anteil in der Regel nicht mehr als 50 Gew.-%, bevorzugt nicht mehr als 40 Gew.-% beträgt.

Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, verschiedene substituierte Vertreter dieser Gruppen und deren Mischungen in Konzentrationen bis zu 1 Gew.-%, bezogen auf das Gewicht der thermoplastischen Formmasse genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern, Glasfasern, amorphe Kieselsäure, Calciumsilicat (Wollastonit), Aluminiumsilicat, Magnesiumcarbonat, Kaolin, Kreide, gepulverter Quarz, Glimmer und Feldspat. Der Anteil derartiger Füll- und Farbstoffe beträgt im Allgemeinen bis zu 50 Gew.-%, bevorzugt bis zu 35 Gew.-%.

Als Keimbildungsmittel können z.B. Talkum, Calciumfluorid, Natriumphenylphosphinat, Aluminiumoxid, Siliciumdioxid und Nylon 22 eingesetzt werden.

Gleit- und Entformungsmittel, welche in der Regel in Mengen bis zu 1 Gew.-% eingesetzt werden können, sind z.B. langkettige Fettsäuren wie Stearinsäure oder Behensäure, deren Salze (z.B. Ca- oder Zn-Stearat) oder Ester (z.B. Stearylstearat oder Pentaerythrittetrastearat) sowie Amidderivate (z.B. Ethylenbisstearylamid). Zur besseren Verarbeitung können in Mengen bis zu 0,1 Gew.-% Antiblockmittel auf mineralischer Basis den erfindungsgemäßen Formmassen zugesetzt werden. Als Beispiele seien amorphe oder kristalline Kieselsäure, Calciumcarbonat oder Aluminiumsilikat genannt.

Als Verarbeitungshilfsmittel kann beispielsweise Mineralöl, vorzugsweise medizinisches Weißöl, in Mengen bis zu 5 Gew.-%, vorzugsweise 2 Gew.-% eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Zur weiteren Verbesserung der Schwerentflammbarkeit können alle für die jeweiligen Thermoplaste bekannten Flammschutzmittel zugegeben werden, insbesondere solche auf Basis von Phosphorverbindungen bzw. roter Phosphor selbst.

Die Herstellung der erfindungsgemäßen Formmassen aus den Komponenten A und gegebenenfalls weiteren Polymeren B1 und B2 sowie Additiven und/oder Hilfsmitteln C kann nach allen bekannten Methoden erfolgen. Vorzugsweise erfolgt jedoch das Abmischen der Komponenten durch Schmelzevermischung, beispielsweise gemeinsames Extrudieren, Kneten oder Verwalzen der Komponenten. Dies wird bei Temperaturen im Bereich von 160 bis 400°C, bevorzugt von 180 bis 280°C durchgeführt. Die Herstellung der erfindungsgemäßen Formmassen kann nach an sich bekannten Verfahren erfolgen.
Zweckmäßigerweise verwendet man hierzu Extruder, z.B. Einschnecken- oder Zweischneckenextruder oder andere herkömmliche Plastifizierungsvorrichtungen wie Brabender-Mühlen oder Banbury-Mühlen.

Die erfindungsgemäß eingesetzte Formmasse zeichnet sich dadurch aus, dass deren Restmonomergehalt nicht mehr als 1000 ppm, vorzugsweise nicht mehr als 500 ppm, besonders bevorzugt nicht mehr als 250 ppm beträgt. Unter Restmonomergehalt ist der Anteil an nicht umgesetztem (nicht einpolymerisierten) Monomer in der Formmasse zu verstehen.

Der geringe Restmonomergehalt ist einerseits darin begründet, dass die in der Formmasse enthaltenen Blockcopolymere A bevorzugt durch anionische Polymerisation hergestellt werden, so dass die zugeführten Monomeren in die wachsende Polymerkette vollständig einpolymerisiert werden.

Ferner zeichnet sich die erfindungsgemäß eingesetzte Formmasse dadurch aus, dass deren Lösungsmittelgehalt (wie z.B. von Ethylbenzol, Toluol, Cyclohexan usw.) nicht mehr als 1000 ppm, vorzugsweise nicht mehr als 500 ppm, besonders bevorzugt nicht mehr als 200 ppm beträgt.

Der geringe Restmonomer- und Lösungsmittelgehalt kann ferner dadurch erzielt werden, dass übliche Verfahren zur Reduzierung von Restmonomeren und Lösungsmitteln aus Polymerschmelzen wie z.B. im Kunststoffhandbuch, Hrg. R. Vieweg und G. Daumiller, Bd. 4 "Polystyrol", Carl-Hanser-Verlag München (1996), S. 121 bis 139, beschrieben angewandt werden. In diesen Verfahren werden typische Entgasungsapparate wie beispielsweise Teilverdampfer, Flachverdampfer, Strangentgaser, Dünnschichtverdampfer oder Entgasungsextruder eingesetzt.

Durch den geringen Restmonomergehalt sowie Lösungsmittelgehalt ist die erfindungsgemäß eingesetzte Formmasse geruchsarm und eignet sich daher hervorragend für 3D-Drucker im Heimanwendungsbereich (home-use).

Zur Vermeidung von starkem Schrumpf liegt der lineare thermische Ausdehnungskoeffizient CLTE der erfindungsgemäßen Formmasse bevorzugt unter 100 x 10⁻⁶ 1/K, besonders bevorzugt unter 85 x 10⁻⁶ 1/K. Ein derartiger CLTE-Wert lässt sich durch den Zusatz von Additiven, insbesondere Mineralien (mineralischen Additiven C) wie faser- und pulverförmigen Füll- und Verstärkungsmitteln und/oder Pigmenten, bevorzugt feinteiligen Mineralien mit einer mittleren Teilchengröße von < 500 µm, bevorzugt <100 µm, in Mengen von 0 bis zu 40 Gew.-%, jeweils bezogen auf die gesamte Formmasse, einstellen.
Falls die erfindungsgemäße Formmasse als Additiv C keine oder nur geringe Mengen (0 bis 10 Gew.-%, bezogen auf die gesamte Formmasse) Mineralien wie faser- und pulverförmige Füll- und Verstärkungsmittel und/oder Pigmente enthält, beträgt in der Formmasse vorzugsweise der Dien-Anteil b) des Vinylaromat-Dien-Blockcopolymers A nicht mehr als 35 Gew.-%, bevorzugt nicht mehr als 30 Gew.-%, besonders bevorzugt nicht mehr als 25 Gew.-%.

Beispiele für geeignete Mineralien (mineralische Additive) sind Kohlenstofffasern, Glasfasern, amorphe Kieselsäure, Calciumsilicat (Wollastonit), Aluminiumsilicat, Magnesiumcarbonat, Kaolin, Kreide, gepulverter Quarz, Glimmer und Feldspat.

Gemäß einer besonderen Ausführungsform enthält die erfindungsgemäße Formmasse:
20 bis 100 Gew.-% Blockcopolymer A,
0 bis 80 Gew.-% Polymer B1, insbesondere Standard-Polystyrol und/oder schlagfestes Polystyrol,
0 bis 30 Gew.-% Polymer B2, und
0,1 bis 40 Gew.-% Mineralien C,
jeweils bezogen auf die gesamte Formmasse, und wobei die Summe aus A; B1, B2 und C 100 Gew.-% ergibt.

Gemäß einer weiteren bevorzugten Ausführungsform enthält die erfindungsgemäße Formmasse:
20 bis 100 Gew.-% Blockcopolymer A,
0 bis 80 Gew.-% Polymer B1, insbesondere Standard-Polystyrol und/oder schlagfestes Polystyrol,
0 bis 30 Gew.-% Polymer B2, und
0 bis 40 Gew.-% Additive und/oder Hilfsmittel C, insbesondere Mineralien C, jeweils bezogen auf die gesamte Formmasse, und wobei die Summe aus A; B1, B2 und C 100 Gew.-% ergibt.

Gemäß einer weiteren bevorzugten Ausführungsform enthält die erfindungsgemäße Formmasse:
20 bis 99,9 Gew.-% Blockcopolymer A,
0 bis 79,9 Gew.-% Polymer B1, insbesondere Standard-Polystyrol und/oder schlagfestes Polystyrol,
0 bis 30 Gew.-% Polymer B2, und
0,1 bis 40 Gew.-% Additive und/oder Hilfsmittel C, insbesondere Mineralien C, jeweils bezogen auf die gesamte Formmasse, und wobei die Summe aus A; B1, B2 und C 100 Gew.-% ergibt.

Ferner bevorzugt ist eine Formmasse der vorgenannten Ausführungsform in der kein Polymer B2 enthalten ist.

Besonders bevorzugt ist eine erfindungsgemäße Formmasse enthaltend:
30 bis 80 Gew.-% Blockcopolymer A,
20 bis 70 Gew.-% Polymer B1, insbesondere Standard-Polystyrol und/oder schlagfestes Polystyrol,
0,2 bis 30 Gew.-% Mineralien C,
jeweils bezogen auf die gesamte Formmasse, und wobei die Summe aus A; B1 und C 100 Gew.-% ergibt.

Weiterhin besonders bevorzugt ist eine erfindungsgemäße Formmasse enthaltend:
30 bis 79,8 Gew.-% Blockcopolymer A,
20 bis 69,8 Gew.-% Polymer B1, insbesondere Standard-Polystyrol und/oder schlagfestes Polystyrol,
0,2 bis 30 Gew.-% Mineralien C,
jeweils bezogen auf die gesamte Formmasse, und wobei die Summe aus A; B1 und C 100 Gew.-% ergibt.

Falls in den vorgenannten bevorzugten Formmassen der Anteil der Mineralien C kleiner 10 Gew.-% ist, beträgt vorzugsweise der Dien-Anteil b) des Vinylaromat-Dien-Blockcopolymers A nicht mehr als 35 Gew.-%, bevorzugt nicht mehr als 30 Gew.-%, besonders bevorzugt nicht mehr als 25 Gew.-%.

Die Viskosität der gesamten Formmasse ist bei Scherraten von 1 bis 10 1/s und bei Temperaturen von 250 °C nicht höher als 1x10⁵ Pa*s, vorzugsweise nicht höher als 1x10⁴ Pa*s, besonders bevorzugt nicht höher als 1x10³ Pa*s.

Die Melt Volume Rate (MVR, gemessen nach ISO 1133 bei 220°C und 10 kg Last) beträgt im Allgemeinen mehr als 6 ml/10 min, bevorzugt mehr als 8 ml/10 min, besonders bevorzugt mehr als 12 ml/10 min.

Die vorgenannten Formmassen werden erfindungsgemäß zur Herstellung von dreidimensionalen Objekten von vorbestimmter Form mit Hilfe einer Vorrichtung für den 3D-Druck verwendet.

Dabei können übliche für den 3D-Druck geeignete Vorrichtungen, insbesondere 3D-Drucker für die Heimanwendung (home-use), eingesetzt werden.

Der Aufbau des dreidimensionalen Objektes erfolgt im Allgemeinen computergesteuert aus der erfindungsgemäß eingesetzten verflüssigten Formmasse nach vorgegebenen Maßen und Formen (CAD).

Zur Herstellung des dreidimensionalen Objektes können übliche Verfahren des 3D-Drucks gemäß dem Stand der Technik wie z.B. in EP-A 1015215 und US 2009/0295032 beschrieben verwendet werden.

Üblicherweise wird zunächst die Formmasse verflüssigt und extrudiert, mehrere Schichten der Formmasse werden auf eine Basis wie einen Träger oder eine vorhergehende Schicht der Formmasse aufgebracht, und dann wird das geformte Material durch Kühlen unter die Erstarrungstemperatur der Formmasse verfestigt.

Die erfindungsgemäß eingesetzten Formmassen weisen ein optimiertes Zähigkeits/Viskositätsverhältnis auf und eignen sich von daher hervorragend für den 3D-Druck. Ein weiterer Vorteil für den Heimanwendungsbereich ist, dass die Formmasse geruchsarm ist, da sie nur einen geringen Restmonomer-Gehalt sowie Lösungsmittelgehalt aufweist.

## Patentansprüche

1. Verwendung von Formmassen für den 3D-Druck enthaltend Komponenten A, B1, B2 und C:
A: 5 bis 100 Gew.-% mindestens eines Vinylaromat-Dien-Blockcopolymers A₁ enthaltend:
a) 30 bis 95 Gew.% mindestens eines Vinylaromaten, und
b) 5 bis 70 Gew.-% mindestens eines Diens,
wobei sich a) und b) zu 100 Gew.-% ergänzen,
B1:0 bis 95 Gew,-% mindestens eines Polymeren B1 ausgewählt aus der Gruppe bestehend aus: Standard-Polystyrol, schlagfestem Polystyrol (HIPS), Styrol-Acrylnitril-Copolymeren, α-Methylstyrol-Acrylnitril-Copolymeren, Styrol-Maleinsäureanhydrid-Copolymeren, Styrol-Phenylmaleinimid-Copolymeren, Styrol-Methylmethacrylat-Copolymeren, Styrol-Acrylnitril-Maleinsäureanhydrid-Copolymeren, Styrol-Acrylnitril-Phenylmaleinimid-Copolymeren, α-Methylstyrol-Acrylnitril-Methylmethacrylat-Copolymeren, α-Methylstyrol-Acrylnitril-t-Butylmethacrylat-Copolymeren und Styrol-Acrylnitril-t-Butylmethacrylat-Copolymeren,
B2:0 bis 60 Gew.-% eines oder mehrerer weiterer Polymere B2 ausgewählt aus: Polycarbonaten, Polyamiden, Poly(meth)acrylaten, Polyestern, teilkristallinen Polyolefinen und Polyvinylchlorid,
C: 0 bis 50 Gew.-% übliche Additive und Hilfsmittel,
wobei die Anteile von A, B1, B2 und C jeweils auf die gesamte Formmasse bezogen sind und deren Summe 100 Gew.-% ergibt,
**dadurch gekennzeichnet, dass** die Viskosität (gemessen nach ISO 11443) der Formmasse bei Scherraten von 1 bis 10 1/s und bei Temperaturen von 250 °C nicht höher als 1x10⁵ Pa*s ist und die Melt Volume Rate (MVR, gemessen nach ISO 1133 bei 220°C und 10 kg Last) mehr als 6 ml/10 min beträgt,
der Restmonomergehalt der Formmasse nicht mehr als 1000 ppm beträgt, und
deren Lösungsmittelgehalt nicht mehr als 1000 ppm beträgt.

2. Verwendung einer Formmasse gemäß Anspruch 1, **dadurch gekennzeichnet, dass** das Blockcopolymer A ein Styrol-Butadien-Blockcopolymer ist.

3. Verwendung einer Formmasse gemäß Anspruch 1 oder 2, **dadurch gekennzeichnet, dass** die Formmasse enthält:
20 bis 100 Gew.-%Blockcopolymer A,
0 bis 80 Gew.-% Polymer B1,
0 bis 30 Gew.-% Polymer B2, und
0,1 bis 40 Gew.-% Mineralien C,
jeweils bezogen auf die gesamte Formmasse, und wobei die Summe aus A, B1, B2 und C 100 Gew.-% ergibt

4. Verwendung einer Formmasse gemäß einem der Ansprüche 1 bis 3, **dadurch gekennzeichnet, dass** die Formmasse enthält:
30 bis 80 Gew.-% Blockcopolymer A,
20 bis 70 Gew.-% Polymer B1,
0,2 bis 30 Gew.-% Mineralien C, enthält,
jeweils bezogen auf die gesamte Formmasse, und wobei die Summe aus A, B1 und C 100 Gew.-% ergibt.

5. Verwendung einer Formmasse gemäß einem der Ansprüche 1 bis 4, **dadurch gekennzeichnet, dass** das Blockcopolymer A ein durch anionische Polymerisation hergestelltes Blockcopolymer ist.

6. Verwendung einer Formmasse gemäß einem der Ansprüche 1 bis 5, **dadurch gekennzeichnet, dass** der lineare thermische Ausdehnungskoeffizient CLTE kleiner 100 x 10⁻⁶ 1/K ist.

7. Verwendung einer Formmasse gemäß einem der Ansprüche 1 bis 6, **dadurch gekennzeichnet, dass** die Formmasse enthält:
20 bis 99,9 Gew.-% Blockcopolymer A,
0,1 bis 79,9 Gew.-% Polymer B1,
0 bis 30 Gew.-% Polymer B2, und
0,1 bis 40 Gew.-% Mineralien C.

8. Verwendung einer Formmasse gemäß einem der Ansprüche 1 bis 4, **dadurch gekennzeichnet, dass** die Formmasse enthält:
30 bis 79,8 Gew.-%Blockcopolymer A,
20 bis 69,8 Gew.-% Polymer B1,
0,2 bis 30 Gew.-% Mineralien C.

9. Verwendung einer Formmasse gemäß einem der Ansprüche 1 bis 8 in 3D-Druckern für die Heimanwendung.

## Claims

1. The use of molding compositions for 3D printing,
comprising components A, B1, B2 and C:
A: 5 to 100 wt% of at least one vinylaromatic-diene block copolymer A containing:
a) 30 to 95 wt% of at least one vinylaromatic, and
b) 5 to 70 wt% of at least one diene,
where a) and b) add up to 100 wt%,
B1: 0 to 95 wt% of at least one polymer B1 selected from the group consisting of: standard polystyrene, high-impact polystyrene (HIPS), styrene-acrylonitrile copolymers, α-methylstyrene-acrylonitrile copolymers, styrene-maleic anhydride copolymers, styrene-phenylmaleimide copolymers, styrene-methyl methacrylate copolymers, styrene-acrylonitrile-maleic anhydride copolymers, styrene-acrylonitrile-phenylmaleimide copolymers, α-methylstyrene-acrylonitrile-methyl methacrylate copolymers, α-methylstyrene-acrylonitrile-tert-butyl methacrylate copolymers, and styrene-acrylonitrile-tert-butyl methacrylate copolymers,
B2: 0 to 60 wt% of one or more further polymers B2 selected from: polycarbonates, polyamides, poly(meth)acrylates, polyesters, semicrystalline polyolefins, and polyvinyl chloride,
C: 0 to 50 wt% of customary additives and auxiliaries,
where the fractions of A, B1, B2, and C are based in each case on the overall molding composition, and their sum makes 100 wt%,
**characterized in that** the viscosity (measured to ISO 11443) of the molding composition at shear rates of 1 to 10 1/s and at temperatures of 250°C is not higher than 1×10⁵ Pa*s and the melt volume rate (MVR, measured to ISO 1133 at 220°C and 10 kg load) is more than 6 ml/10 min,
the residual monomer content of the molding composition is not more than 1000 ppm, and
the solvent content is not more than 1000 ppm.

2. The use of a molding composition as claimed in claim 1, **characterized in that** the block copolymer A is a styrene-butadiene block copolymer.

3. The use of a molding composition as claimed in claim 1 or 2, **characterized in that** the molding composition comprises:
20 to 100 wt% of block copolymer A,
0 to 80 wt% of polymer B1,
0 to 30 wt% of polymer B2, and
0.1 to 40 wt% of minerals C,
based in each case on the overall molding composition, and where the sum of A, B1, B2 and C makes 100 wt%.

4. The use of a molding composition as claimed in any of claims 1 to 3, **characterized in that** the molding composition comprises:
30 to 80 wt% of block copolymer A,
20 to 70 wt% of polymer B1,
0.2 to 30 wt% of minerals C,
based in each case on the overall molding composition, and where the sum of A, B1 and C makes 100 wt%.

5. The use of a molding composition as claimed in any of claims 1 to 4, **characterized in that** the block copolymer A is a block copolymer prepared by anionic polymerization.

6. The use of a molding composition as claimed in any of claims 1 to 5, **characterized in that** the coefficient of linear thermal expansion CLTE is less than 100 × 10⁻⁶ 1/K.

7. The use of a molding composition as claimed in any of claims 1 to 6, **characterized in that** the molding composition comprises:
20 to 99.9 wt% of block copolymer A,
0.1 to 79.9 wt% of polymer B1,
0 to 30 wt% of polymer B2, and
0.1 to 40 wt% of minerals C.

8. The use of a molding composition as claimed in any of claims 1 to 4, **characterized in that** the molding composition comprises:
30 to 79.8 wt% of block copolymer A,
20 to 69.8 wt% of polymer B1,
0.2 to 30 wt% of minerals C.

9. The use of a molding composition as claimed in any of claims 1 to 8 in 3D printers for home application.

## Revendications

1. Utilisation de compositions de moulage pour impression 3D comprenant les composants A, B1, B2 et C:
A: 5 à 100% en poids d'au moins un copolymère séquencé diène-styréne A comprenant:
a) 30 à 95% en poids d'au moins un styrène, et
b) 5 à 70% en poids d'au moins un diène,
dans lequel a) et b) forment ensemble 100% en poids,
B1: 0 à 95% en poids d'au moins un polymère B1 choisi dans le groupe constitué par: le polystyrène standard, le polystyrène choc (HIPS), les copolymères styrène-acrylonitrile, les copolymères α-méthylstyrène-acrylonitrile, les copolymères styrène-anhydride de l'acide maléique, les copolymères styrène-phénylmaléinimide, les copolymères styrène-méthylméthacrylate, les copolymères styrène-acrylonitrile-anhydride de l'acide maléique, les copolymères styrène-acrylonitrile-phénylmaléinimide, les copolymères α-méthylstyrène-acrylonitrile-méthylméthacrylate, les copolymères α-méthylstyrène-acrylonitrile-t-butylméthacrylate, les copolymères styrène-acrylonitrile-t-butylméthacrylate;
B2: 0 à 60% en poids d'un ou plusieurs autres polymères B2 choisis parmi: les polycarbonates, les polyamides, les poly(méth)acrylates, les polyesters, les polyoléfines partiellement cristallines et le polychlorure de vinyle,
C: 0 à 50% en poids d'additifs et d'auxiliaires classiques,
dans lesquels les proportions de A, B1, B2 et C, respectivement, sont exprimés par rapport à la totalité de la composition de moulage et leur somme est de 100% en poids,
ces compositions de moulage étant **caractérisées**
- **en ce que** la viscosité (mesurée selon la norme ISO 11443) de la composition de moulage à des vitesses de cisaillement de 1 à 10 1/s et à des températures de 250°C est non supérieures à 1 x10⁵ Pa*s
- **en ce que** le débit de masse fondue (MVR, mesuré selon la norme ISO 1133 à 220°C et 10 kg de charge) est supérieur à 6 ml/10 min,
- **en ce que** la teneur en monomères résiduels de la composition de moulage ne dépasse pas 1000 ppm, et
- **en ce que** la teneur en solvant ne dépasse pas 1000 ppm.

2. Utilisation d'une composition de moulage selon la revendication 1, **caractérisée en ce que** le copolymère séquencé A est un copolymère séquencé styrène-butadiène.

3. Utilisation d'une composition de moulage selon la revendication 1 ou 2, **caractérisée en ce que** la composition de moulage contient:
20 à 100% en poids de copolymère séquencé A,
0 à 80% en poids de polymère B1,
0 à 30% en poids de polymère B2 et
0,1 à 40% en poids de minéraux C,
ces proportions étant basées sur la totalité de la composition de moulage et la somme de A, B1, B2 et C étant de 100% en poids.

4. Utilisation d'une composition de moulage selon l'une quelconque des revendications 1 à 3, **caractérisée en ce que** la composition de moulage contient:
30 à 80% en poids de copolymère séquencé A,
20 à 70% en poids de polymère B1,
0,2 à 30% en poids de minéraux C,
ces proportions étant basées sur la totalité de la composition de moulage et la somme de A, B1 et C étant de 100% en poids.

5. Utilisation d'une composition de moulage selon l'une quelconque des revendications 1 à 4, **caractérisée en ce que** le copolymère séquencé A est un copolymère séquencé préparé par polymérisation anionique.

6. Utilisation d'une composition de moulage selon l'une quelconque des revendications 1 à 5, **caractérisée en ce que** son coefficient de dilatation thermique linéaire CLTE est inférieur à 100 x 10⁻⁶ 1/K.

7. Utilisation d'une composition de moulage selon l'une quelconque des revendications 1 à 6, **caractérisée en ce que** la composition de moulage contient:
20 à 99,9% en poids de copolymère séquencé A,
0,1 à 79,9% en poids de polymère B1,
0 à 30% en poids. -% de polymère B2 et
0,1 à 40% en poids de minéraux C.

8. Utilisation d'une composition de moulage selon l'une quelconque des revendications 1 à 4, **caractérisée en ce que** la composition de moulage contient:
30 à 79,8% en poids de copolymère séquencé A,
20 à 69,8% en poids de polymère B1,
0,2 à 30% en poids de minéraux C.

9. Utilisation d'une composition de moulage selon l'une quelconque des revendications 1 à 8, dans des imprimantes SD à usage domestique.
